# EUROPÄISCHE PATENTANMELDUNG

(11) **EP 3 957 380 A1**
(43) Veröffentlichungstag der Anmeldung: **23.02.2022**
(21) Anmeldenummer: 21197343.3
(22) Anmeldetag: 23.02.2016
(51) Int. Cl.: B01D 46/00, B01D 46/24

(54) **FILTERELEMENT UND VERFAHREN ZUM HERSTELLEN EINES FILTERELEMENTS**

(30) Priorität: 03.03.2015 DE 102015002673
(62) Teilanmeldung aus: 16705951.8
(71) Anmelder: MANN+HUMMEL GmbH, 71636 Ludwigsburg (DE)
(72) Erfinder: PANNI, Andreas, 76684 Östringen-Odenheim (DE); DWORATZEK, Klemens, 68535 Edingen (DE); SCHMELZLE, Janine, 76761 Rülzheim (DE); VOGT, Frank, 67374 Hanhofen (DE); EVCÜMEN, Gökhan, 67374 Hanhofen (DE)
(74) Vertreter: Mann + Hummel Intellectual Property

(57) **Zusammenfassung**

Die Erfindung beschreibt ein Filterelement (100) zum Einbau in ein Gehäuse (102), umfassend wenigstens einen zum Abscheiden von Flüssigkeit aus Aerosol ausgebildeten, im Wesentlichen hohlzylindrischen Filterbalg (10, 20) und zwei zum Abdecken axialer Endbereiche (12, 14, 22, 24) des Filterbalgs (10, 20) ausgebildete Abdeckelemente (30, 40). Der wenigstens eine Filterbalg (10, 20) ist mit seinen axialen Endbereichen (12, 14, 22, 24) jeweils gegen das Abdeckelement (30, 40) mit einer axialen Verpressung verpresst. Der wenigstens eine Filterbalg (10, 20) ist in axialer Richtung fixiert und zwischen Filterbalg (10, 20) und Abdeckelement (30, 40) ist jeweils ein Dichtbereich (16, 18, 26, 28) ausgebildet.

## Beschreibung

### Technisches Gebiet

Die Erfindung betrifft ein Filterelement zum Einbau in ein Gehäuse, insbesondere in einen Druckbehälter, das wenigstens einen zum Abscheiden von Flüssigkeit aus Aerosol, insbesondere von Öl aus Aerosol, beispielsweise zum Entölen von Luft, ausgebildeten, im Wesentlichen hohlzylindrischen Filterbalg, beispielsweise mindestens ein zylinderförmig gewickeltes Abscheideelement, aufweist.

### Stand der Technik

Aus der WO 2013 024105 A1 ist ein Filter zur Entölung von Luft, die aus einem Druckluftkompressor oder einer Vakuumpumpe stammt, bekannt. Bei diesem Filter wird über den Einsatz eines Klebstoffes oder einer Vergussmasse eine dichte Verbindung zwischen den Filterbälgen und einer U-förmigen Nut eines Abdeckelements des Filters hergestellt. Die Verwendung von Klebstoffen zum Befestigen der Filterbälge ist jedoch teuer und zum anderen aufgrund der teilweise nicht gegebenen chemischen und thermischen Stabilität problematisch.

Ein weiteres Filterelement ist aus der WO 96 28238 A1 bekannt. Bei diesem Filterelement ist ein auf ein Stützrohr gewickelter Filterbalg mittels einer Bördelverbindung oder einer Bördelung mit einem Befestigungsflansch des Filtergehäuses verbunden. Unter Bördelverbindung wird vorliegend eine Verbindung verstanden, die durch rechtwinkliges Aufbiegen eines Randes eines runden oder ovalen Blechs hergestellt ist. Die aus der WO 96 28238 A1 bekannte Bördelverbindung ermöglicht es, auf ein Verkleben des Filterbalgs an den Stirnseiten des Filterelements zu verzichten. Zur Herstellung dieser Bördelverbindung ist im Endbereich des Luftentölelements ein Bördelring angeordnet. Dieser Bördelring ist ein separates Element, das nicht in das stirnseitige Abdeckelement des Filterelements integriert ist. Der Bördelring selbst ist nicht gebördelt, sondern dient als Gegenhalter für eine in den Befestigungsflansch und das Stützrohr eingebrachte Sicke.

Der Erfindung liegt die Aufgabe zugrunde, ein Filterelement der eingangs genannten Art sowie ein Verfahren der eingangs genannten Art so weiterzubilden, dass das Filterelement kompakt aufgebaut ist und kostengünstig und einfach herstellbar ist.

### Offenbarung der Erfindung

Diese Aufgabe wird durch ein Filterelement gelöst, das zum Einbau in ein Gehäuse vorgesehen ist, umfassend wenigstens einen im Wesentlichen hohlzylindrischen Filterbalg und zwei zum Abdecken axialer Endbereiche des Filterbalgs ausgebildete Abdeckelemente, wobei der wenigstens eine Filterbalg mit seinen axialen Endbereichen jeweils gegen das Abdeckelement mit einer axialen Verpressung verpresst ist, der wenigstens eine Filterbalg in axialer Richtung fixiert ist und zwischen Filterbalg und Abdeckelement jeweils ein Dichtbereich ausgebildet ist. Günstige Ausgestaltungen und Vorteile der Erfindung ergeben sich aus den weiteren Ansprüchen, der Beschreibung und der Zeichnung.

Es wird ein Filterelement zum Einbau in ein Gehäuse vorgeschlagen, wobei das Filterelement wenigstens einen zum Abscheiden von Flüssigkeit aus Aerosol ausgebildeten, im Wesentlichen hohlzylindrischen Filterbalg und zwei zum Abdecken axialer Endbereiche des Filterbalgs ausgebildete Abdeckelemente umfasst. Der wenigstens eine Filterbalg ist mit seinen axialen Endbereichen jeweils gegen das Abdeckelement mit einer axialen Verpressung verpresst. Der wenigstens eine Filterbalg ist in axialer Richtung fixiert, und zwischen Filterbalg und Abdeckelement ist jeweils ein Dichtbereich ausgebildet.

Vorzugsweise ist das Filterelement für Betriebsdrücke von mindestens 50 mbar vorgesehen, besonders bevorzugt für Betriebsdrücke von mindestens 200 mbar. Günstig ist ein Betriebsdruck von höchstens 1 bar. Für andere Anwendungen, etwa als Filterelement im Bereich von Kompressoren, kann das Filterelement für andere, insbesondere höhere, Betriebsdrücke ausgebildet sein.

Das Filtermedium des Filterelements kann insbesondere aus Vlies bestehen. Der Filterbalg kann als mehrlagiger Wickel ausgebildet sein oder auch als einlagiger Zylinder. Es kann auch mehr als ein Filterbalg vorgesehen sein, insbesondere ein Primärfilterbalg und ein Sekundärfilterbalg. Das Abdeckelement kann insbesondere eine Endscheibe sein und aus Metall oder Kunststoff bestehen.

Mit besonderem Vorteil kann durch die axiale Verpressung der Filterbalg an seinem Endbereich im verpressten Bereich eine Dichtfunktion zum Abdeckelement übernehmen, die ausreichend ist, um auf Klebstoff oder Vergussmasse verzichten zu können. Die Dichtfunktion wird durch ein Filtermedium des Filterbalgs oder eines Filterbalgverbunds an dieser Stelle übernommen. Trotz der grundsätzlichen Durchlässigkeit des Filtermediums ist die Durchlässigkeit gering genug, dass selbst bei Betriebsdruck bei bestimmungsgemäßem Einsatz des Filterelements die Dichtfunktion erhalten bleibt. Der Anpressdruck des Filterbalgs gegen das Abdeckelement wird zweckmäßigerweise passend zum Einsatzzweck des Filterelements ausgewählt.

Gemäß einer günstigen Ausgestaltung des Filterelements kann wenigstens einer der Dichtbereiche zwischen Filterbalg und dem jeweiligen Abdeckelement jeweils durch den axialen Endbereich des wenigstens einen Filterbalgs gebildet sein, der bündig an dem jeweiligen Abdeckelement anliegen kann. Alternativ kann wenigstens einer der Dichtbereiche durch einen Filterbalgverbund gebildet sein, wobei der axiale Endbereich des Filterbalgs an wenigstens einem weiteren Filterbalg, insbesondere einem ringförmigen Filterbalg, anliegen kann. Beide axialen Endbereiche des Filterelements können auf dieselbe Weise gedichtet sein, oder es können an einem Endbereich der verpresste Filterbalg und am anderen Endbereich ein Filterbalgverbund eingesetzt sein. Grundsätzlich ist es jedoch auch denkbar, den Filterbalg an einem seiner Endbereiche mit Klebstoff oder Vergussmasse zu versehen und so die Verbindung zum Abdeckelement herzustellen und abzudichten.

Die Dichtfunktion über einen verpressten Endbereich des Filterbalgs oder Filterbalgverbunds bereitzustellen, hat den Vorteil, dass die verwendeten Filtermedien im Vergleich zu Klebstoff und Vergussmasse üblicherweise chemisch beständiger sind, was für die Zuverlässigkeit und die Lebensdauer des Filterelements günstig ist.

Gemäß einer günstigen Ausgestaltung des Filterelements können zur axialen Verpressung des Filterbalgs ein oder mehrere Zuganker vorgesehen sein, wobei insbesondere ein Stützrohr des Filterbalgs als Zuganker vorgesehen sein kann und/oder wobei insbesondere ein radial den äußeren Filterbalg umgebendes Schutzelement als Zuganker vorgesehen sein kann. Auch können ein oder mehrere Zugstangen durch die Abdeckelemente geführt sein. Diese Maßnahmen können auch miteinander kombiniert sein. Vorteilhaft ist mit einem oder mehreren Zugankern eine sichere Anlage des Filterbalgs an dem Abdeckelement gewährleistet, auch im Betrieb des Filterelements unter Betriebsdruck.

Gemäß einer günstigen Ausgestaltung des Filterelements kann zur axialen Verpressung ein Stützrohr des Filterbalgs mit wenigstens einem der Abdeckelemente verschweißt sein. Sind mehrere Filterbälge vorgesehen, ist es von Vorteil, wenn alle Filterbälge mit Stützrohren versehen sind.

Gemäß einer günstigen Ausgestaltung des Filterelements kann eine axiale Erstreckung des Filterbalgs größer sein als die seines Stützrohrs. Hiermit kann besonders einfach eine axiale Verpressung des Filterbalgs in seinem Endbereich erreicht werden.

Das Filterelement weist zwei Abdeckelemente auf, wobei bei der Herstellung des Filterelements die beiden Abdeckelemente an einander gegenüberliegenden axialen Endbereichen des Filterbalgs angeordnet werden und der Filterbalg an seinen beiden axialen Endbereichen jeweils mit einem der Abdeckelemente verbunden wird. Bei der vorliegenden Erfindung können beide Abdeckelemente in den verschiedenen Varianten zeitgleich mit dem Filterbalg verbunden werden. Im Gegensatz hierzu muss beim Stand der Technik, bei dem der Filterbalg mittels Kleben mit den Abdeckelementen verbunden wird, zunächst ein erster axialer Endbereich des Filterelements mit dem diesem zugeordneten Abdeckelement verklebt werden, dann das Trocknen des Klebers abgewartet werden und erst anschließend kann der gegenüberliegende axiale Endbereich des Filterelements mit dem diesem zugeordneten Abdeckelement verklebt werden.

Vorteilhaft kann das Herstellen eines Filterelements zum Einbau in ein Gehäuse so erfolgen, dass ein zum Abscheiden von Flüssigkeit aus einem Aerosol ausgebildeter hohlzylindrischer Filterbalg oder Filterbalgverbund in axialer Richtung gegen ein zum Abdecken eines axialen Endbereichs des Filterbalgs oder Filterbalgverbunds ausgebildetes Abdeckelement mit einer axialen Verpressung verpresst wird, sowie ein axiales Fixieren des Filterbalgs oder Filterbalgverbunds unter Beibehaltung der axialen Verpressung erfolgt.

Gemäß einer günstigen Ausgestaltung des Filterelements kann die axiale Verpressung durch Verschweißen eines Stützrohrs und/oder einen Zuganker und/oder eine mechanische Verbindung zwischen dem Abdeckelement und dem Filterbalg rein durch eine mittels Verformen oder Umformen des Abdeckelements gebildete Struktur des Abdeckelements gebildet sein, wobei die Struktur des Abdeckelements dazu ausgebildet sein kann, den Filterbalg am Abdeckelement festzuklemmen.

Mithin basiert die vorliegende Erfindung nach dieser günstigen Ausgestaltung auf dem Prinzip, den Filterbalg ausschließlich mittels des Verformens des Abdeckelements am Abdeckelement festzuklemmen. Das Verformen des Abdeckelements erfolgt vorzugsweise mittels der Technik des Sickens oder Bördelns.

Bei einer vorteilhaften Ausführungsform der vorliegenden Erfindung wird über das Verformen des Abdeckelements eine dichte, insbesondere gasdichte, Verbindung zwischen dem Filterbalg bzw. zwischen mindestens einem der Filterbälge und dem Abdeckelement bzw. mindestens einem der Abdeckelemente hergestellt.

Das Abdeckelement kann mindestens eine insbesondere aus Metall gebildete Endscheibe sein, wobei die Endscheibe die Stirnseite des Filterbalgs und zumindest einen stirnseitennahen Bereich der Mantelfläche des Filterbalgs abdeckt und derart mit dem Filterbalg verbunden ist, dass die Reinseite des Filterbalgs von der Umgebung gasdicht getrennt ist.

Die mechanische Verbindung zwischen dem Abdeckelement und dem Filterbalg ist rein durch eine mittels Verformen oder Umformen des Abdeckelements gebildete Struktur des Abdeckelements gebildet, wobei diese Struktur dazu ausgebildet ist, den Filterbalg verrutschsicher am Abdeckelement festzuklemmen.

Die Struktur weist vorteilhafterweise mindestens zwei Abdeckelementsicken auf, welche eine in das Abdeckelement integrierte Bördelung bilden.

Bei einer vorteilhaften Ausführungsform der vorliegenden Erfindung ist der mindestens eine Filterbalg in einer U-förmigen Nut des Abdeckelements aufgenommen, wobei zum Verbinden des Abdeckelements mit dem Filterbalg die beiden Schenkel dieser U-förmigen Nut mindestens eine Abdeckelementsicke aufweisen und die Abdeckelementsicken dazu ausgebildet sind, den in der Nut aufgenommenen Filterbalg verrutschsicher festzuklemmen.

Um eine optimale Klemmwirkung zu erzielen, sind die Abdeckelementsicken vorteilhafterweise an einander gegenüberliegenden Bereichen der Schenkel der Nut angeordnet.

Ein besonders vorteilhaftes Ausführungsbeispiel der vorliegenden Erfindung grenzt sich gegenüber dem Stand der Technik, insbesondere der WO 96 28238 A1, dadurch ab, dass eine zum Verbinden des Abdeckelements mit dem Filterbalg ausgebildete Bördelung mit zwei gegenüberliegenden Sicken direkt in das Abdeckelement integriert ist, das dafür an zumindest einer Stelle eine U-Form bildet.

Die Abdeckelementsicken sind rinnenförmige Vertiefungen des Abdeckelements und können beispielsweise maschinell mit einer Sickenmaschine mit Hilfe zweier Sickenrollen in das Abdeckelement gedrückt werden. Alternativ können die Abdeckelementsicken auch manuell mit einem Sickenhammer hergestellt werden.

Um den gesamten axialen Endbereich zumindest eines der Filterbälge aufnehmen zu können, ist die Nut vorteilhafterweise in einer Schnittansicht quer zur Längsachse des Filterelements im Wesentlichen ringförmig ausgebildet. Um eine möglichst gleichmäßige Klemmwirkung zu erzielen, umlaufen die Abdeckelementsicken vorteilhafterweise den gesamten Umfang der Schenkel der Nut.

Das Filterelement kann beispielsweise zwei Abdeckelemente oder Endscheiben aufweisen, die jeweils an gegenüberliegenden axialen Endbereichen des Filterbalgs angeordnet sind. Im Falle von zwei Abdeckelementen ist vorteilhafterweise in beide Abdeckelemente eine mittels Verformen oder Umformen der jeweiligen Abdeckelemente gebildete Struktur mit Abdeckelementsicken integriert.

Das Filterelement kann mindestens zwei Filterbälge, insbesondere mindestens einen Primärfilterbalg und mindestens einen Sekundärfilterbalg, aufweisen. Dabei können in der Nut beispielsweise die axialen Endbereiche von zumindest zwei Filterbälgen aufgenommen sein, wobei die jeweiligen Filterbälge durch mindestens einen Abstandshalter, beispielsweise mindestens ein Einlegelement, voneinander beabstandet sein können. In das Abdeckelement kann also beispielsweise nur eine Struktur integriert sein, so dass das Abdeckelement beispielsweise an nur einer Stelle eine U-Form bildet.

Alternativ kann das mindestens eine Abdeckelement für jeden der Filterbälge eine U-förmige Nut aufweisen. Bei diesem Ausführungsbeispiel bildet das mindestens eine Abdeckelement an mindestens zwei Stellen eine U-Form.

Die mindestens eine U-förmige Nut liegt jeweils an der äußeren Mantelfläche, an der inneren Mantelfläche und an der Deckfläche des ihr zugeordneten hohlzylindrischen Filterbalgs direkt oder indirekt, z.B. unter Zwischenordnung mindestens eines zum Stützen des Filterbalgs ausgebildeten Stützrohrs, an.

Bei einer besonders vorteilhaften Ausführungsform der vorliegenden Erfindung sind die folgenden Elemente des Filterelements, nämlich
- der mindestens eine Filterbalg,
- das mindestens eine Abdeckelement,
- optionalerweise mindestens ein in der Nut angeordnetes axial wirkendes Dichtelement,
- optionalerweise mindestens ein zum Stützen des Filterbalgs ausgebildetes, insbesondere metallisches Stützrohr und
- optionalerweise mindestens ein rohrartig geformtes, insbesondere metallisches Schutzelement, insbesondere ein gitterartig durchbrochenes metallisches Schutzrohr, das die äußere Mantelfläche des Filterbalgs umgibt,
rein mechanisch miteinander verbunden, wobei die Verbindung ausschließlich durch ein Verformen der metallischen Elemente des Filterbalgs, insbesondere des Abdeckelements und optionalerweise des Stützrohrs und/oder des Schutzelements, gebildet ist.

Bei der Herstellung des Filterelements wird vorteilhafterweise zunächst der Filterbalg in eine U-förmige Nut des Abdeckelements eingesetzt und zum Verbinden des in die Nut des Abdeckelements eingesetzten Filterbalgs mit dem Abdeckelement in die beiden Schenkel der Nut derart mindestens eine Abdeckelementsicke eingedrückt, dass die Abdeckelementsicken den Filterbalg verrutschsicher festklemmen.

Mögliche Anwendungen der Erfindung sind alle Arten von Abscheidern, die auf einem gewickelten Abscheidemedium beruhen. Aktuell sind dies beispielsweise Ölabscheider mit und ohne Flansch sowie Ölabscheide-Boxen, sog. Spin-On, als auch Ölabscheider, wie sie in Kurbelgehäuseentlüftungen zum Einsatz kommen.

### Kurze Beschreibung der Zeichnungen

Wie bereits vorstehend erörtert, gibt es verschiedene Möglichkeiten, die Lehre der vorliegenden Erfindung in vorteilhafter Weise auszugestalten und weiterzubilden. Weitere Vorteile ergeben sich aus der folgenden Zeichnungsbeschreibung. In den Zeichnungen sind Ausführungsbeispiele der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen. Es zeigt:
- Fig. 1: in Längsschnittdarstellung ein erstes Ausführungsbeispiel für ein Filterelement gemäß der vorliegenden Erfindung, das nach dem Verfahren gemäß der vorliegenden Erfin-dung hergestellt wird;
- Fig. 2: in isometrischer Längsschnittdarstellung das Filterelement aus Figur 1 ohne die Si-ckenrollen der Sickenmaschine;
- Fig. 3: in Längsschnittdarstellung ein zweites Ausführungsbeispiel für ein Filterelement gemäß der vorliegenden Erfindung, das nach dem Verfahren gemäß der vorliegenden Erfin-dung hergestellt ist;
- Fig.4: in isometrischer Längsschnittdarstellung das Filterelement aus Figur 3, wobei dieses Filterelement in ein Gehäuse eingebaut ist;
- Fig. 5: in Längsschnittdarstellung ein Detail eines Ausführungsbeispiels eines Filterelements, bei dem ein radial außen angeordnetes Schutzelement als Zuganker dient;
- Fig. 6: in Längsschnittdarstellung ein Detail eines Ausführungsbeispiels eines Filterelements, bei dem ein Stützrohr als Zuganker dient;
- Fig. 7: in Längsschnittdarstellung eine Variante des Ausführungsbeispiels in Figur 6, bei dem ein Stützrohr als Zuganker dient;
- Fig. 8: in Längsschnittdarstellung eine Variante des Ausführungsbeispiels in Figur 6, bei dem ein Stützrohr als Zuganker dient.
- Fig. 9: in Längsschnittdarstellung ein Detail eines Ausführungsbeispiels eines Filterelements, bei dem ein Filterbalgverbund zur axialen Abdichtung eingesetzt ist;
- Fig. 10: in Längsschnittdarstellung ein Detail des Ausführungsbeispiels aus Figur 9;
- Fig. 11: in Längsschnittdarstellung ein Detail eines Ausführungsbeispiels eines Filterelements, bei dem ein Stützrohr in axialer Erstreckung länger ausgebildet ist als ein zugehöriger Filterbalg;
- Fig. 12: in Längsschnittdarstellung ein Detail einer Variante des Ausführungsbeispiels aus Figur 11 mit einer geklemmten Verbindungsvariante von Stützrohr und Abdeckelement;
- Fig. 13: in Längsschnittdarstellung ein Detail einer Variante des Ausführungsbeispiels aus Figur 11 mit einer geschweißten Verbindungsvariante von Stützrohr und Abdeckelement;
- Fig. 14: in Längsschnittdarstellung ein Detail eines Ausführungsbeispiels eines Filterelements, bei dem ein Filterbalg eine größere axiale Erstreckung aufweist als dessen Stützrohr;
- Fig. 15: in Längsschnittdarstellung ein Detail einer Variante des Ausführungsbeispiels in Figur 14, mit einer verkrallten Verbindungsvariante von Stützrohr und Abdeckelement;
- Fig. 16: in Längsschnittdarstellung ein Detail einer Variante des Ausführungsbeispiels in Figur 14, mit einem Fügeschritt zwischen Stützrohr und Abdeckelement;
- Fig. 17: in Längsschnittdarstellung ein Detail der Variante des Ausführungsbeispiels in Figur 16, mit einem auf den Fügeschritt folgenden Verformungsschritt;
- Fig. 18: in Längsschnittdarstellung ein Detail eines Ausführungsbeispiels eines Filterelements, bei dem ein Stützrohr mit einem Abdeckelement verschweißt ist;
- Fig. 19: in Längsschnittdarstellung ein Detail eines Ausführungsbeispiels eines Filterelements, bei dem ein Stützrohr mit einem Abdeckelement verschweißt werden soll;
- Fig. 20: in Längsschnittdarstellung ein Detail des Ausführungsbeispiels eines Filterelements nach Figur 19, bei dem ein Stützrohr mit einem Abdeckelement verschweißt ist.

Gleiche oder ähnliche Ausgestaltungen, Elemente oder Merkmale sind in den Figuren mit identischen Bezugszeichen versehen.

### Ausführungsform(en) der Erfindung

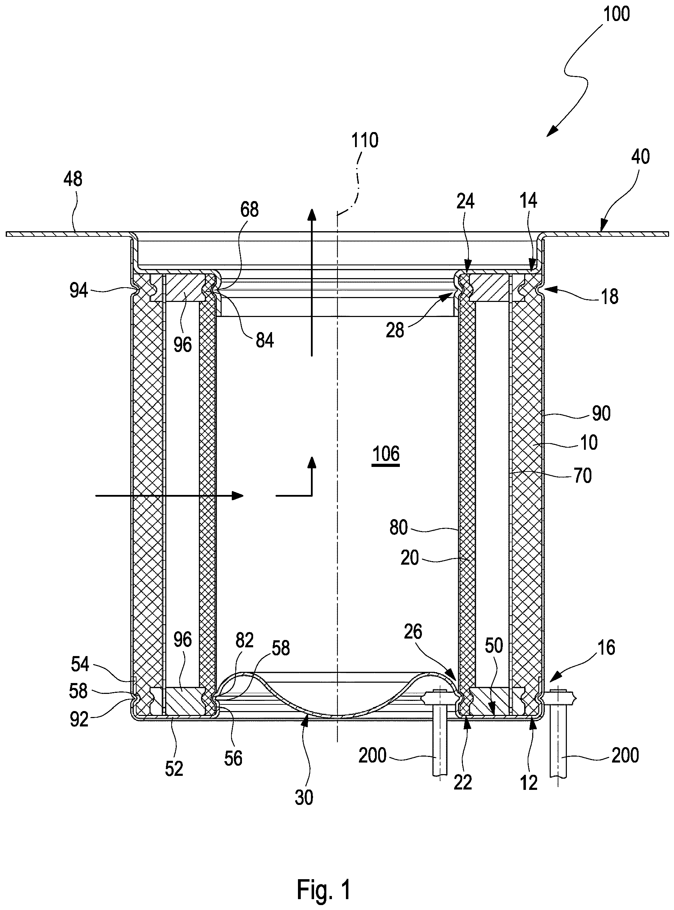

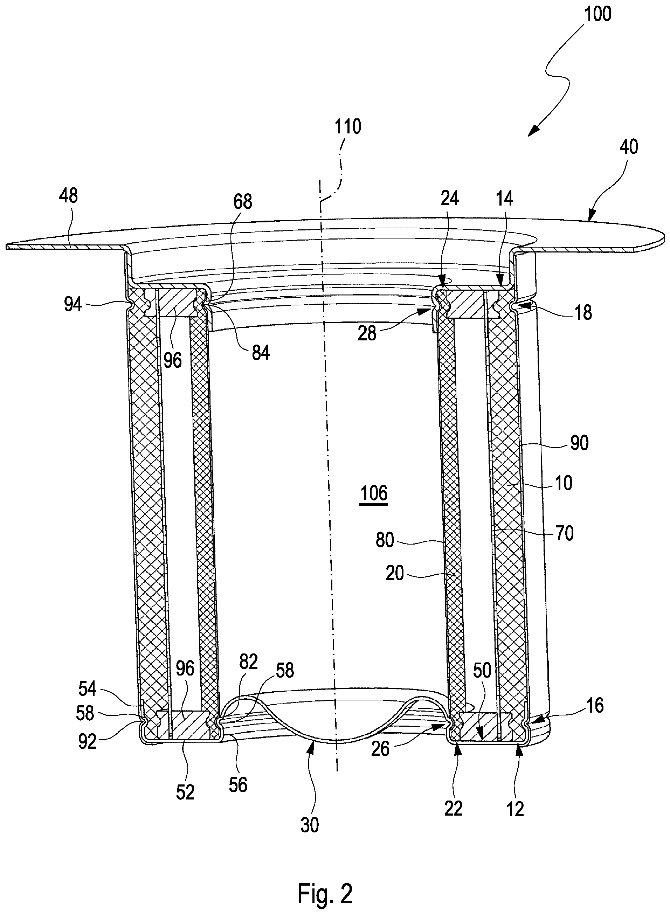

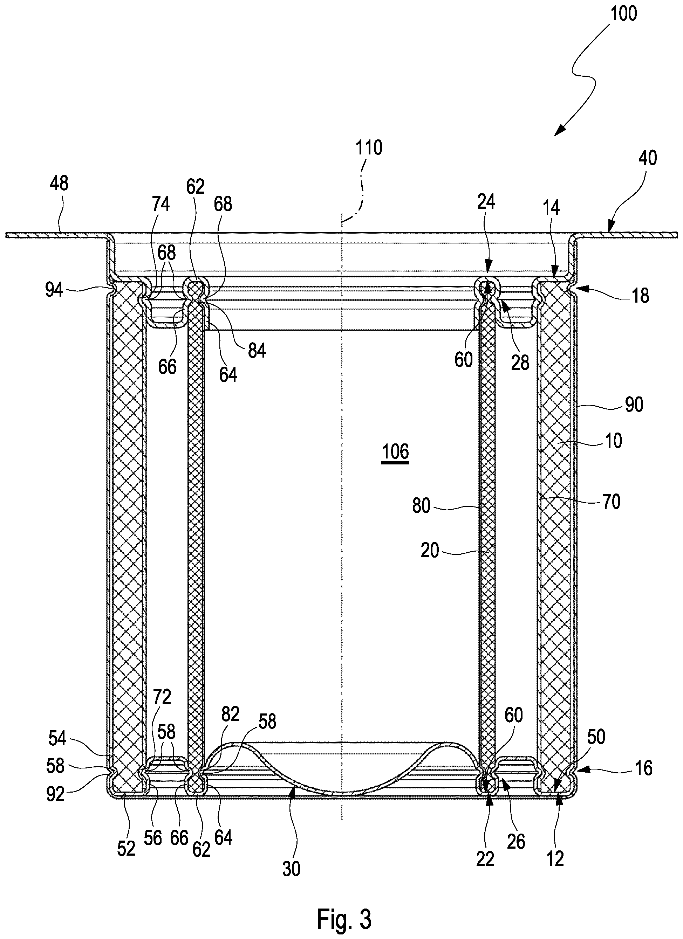

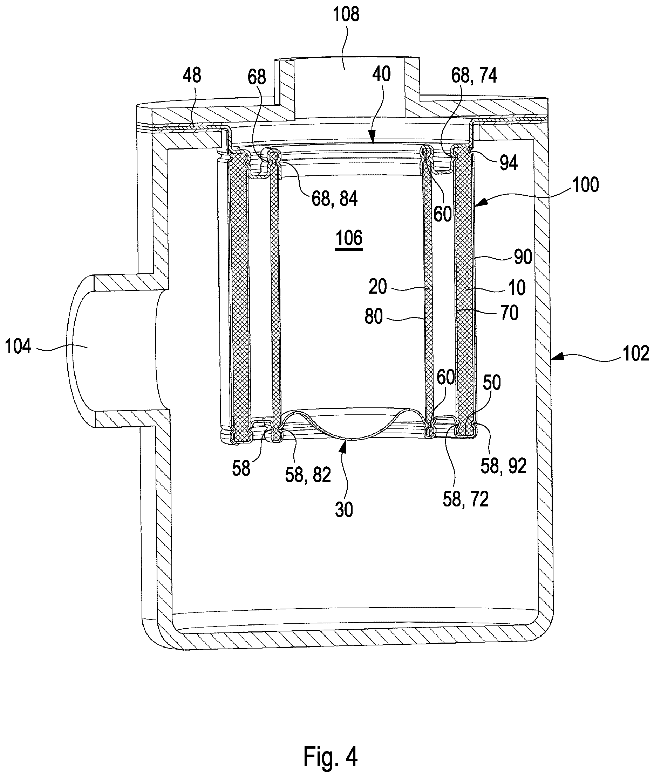

Zur Vermeidung überflüssiger Wiederholungen beziehen sich die nachfolgenden Erläuterungen hinsichtlich der Ausgestaltungen, Merkmale und Vorteile des ersten Ausführungsbeispiels der vorliegenden Erfindung (soweit nicht anderweitig angegeben) sowohl auf das in Figuren 1 und 2 dargestellte Filterelement 100 als auch auf das in Figuren 3 und 4 dargestellte Filterelement 100. Das Filterelement 100 weist eine Längsachse 110 auf und ist vorzugsweise hohlzylindrisch ausgebildet.

Figur 1 zeigt ein erstes Ausführungsbeispiel für ein Filterelement 100 bei dessen Herstellung. Bei der Herstellung dieses Filterelements 100 werden zwei zum Abscheiden von Flüssigkeit aus einem Aerosol ausgebildete hohlzylindrische Filterbälge 10, 20, nämlich ein Primärfilterbalg 10 und ein Sekundärfilterbalg 20, rein mechanisch mit an den jeweiligen Stirnseiten des Filterbalgs 10, 20 angeordneten Abdeckelementen 30, 40, nämlich mit einer ersten Endscheibe 30 und einer zweiten Endscheibe 40 verbunden.

Die Abdeckelemente 30, 40, insbesondere die Endscheiben 30, 40, sind zum Abdecken des jeweiligen axialen Endbereichs 12, 14 und 22, 24, insbesondere eines Stirnbereichs oder einer Deckfläche, des Filterelements 10, 20 vorgesehen.

Die zweite Endscheibe 40 ist ein zum Abdecken des Filterelements 100 ausgebildeter Deckel. Die Verbindung zwischen der ersten Endscheibe 30 und den Filterbälgen 10, 20 wird ausschließlich durch ein Verformen oder Umformen der ersten Endscheibe 30 bereitgestellt. Dabei wird die Endscheibe 30 derart verformt oder derart umgeformt, dass die Filterbälge 10, 20 verrutschsicher an der Endscheibe 30 festklemmen.

Die Strömungsrichtung des zu filternden Aerosols ist in Figur 1 mittels Pfeilen markiert.

Zum Aufnehmen der Stirnseite der Filterbälge 10, 20 weist die Endscheibe 30 eine U-förmige Nut 50 auf. Diese U-förmige Nut 50 umgibt den gesamten ringförmigen axialen Endbereich der hohlzylindrischen Filterbälge 10, 20. Die Nut 50 des Abdeckelements 30 weist einen Boden 52 mit einem ersten Schenkel 54 und einem zweiten Schenkel 56 auf.

Um eine optimale Filterwirkung zu erzielen, sind die Filterbälge 10, 20 durch mindestens einen Abstandshalter 96, beispielsweise durch mindestens ein Einlegelement, voneinander beabstandet.

Zum Herstellen der Verbindung zwischen den Filterbälgen 10, 20 und der ersten Endscheibe 30 wird an den beiden Schenkeln 54, 56 der Nut 50 mittels Sickenrollen 200 einer Sickenmaschine mindestens eine Abdeckelementsicke 58 derart eingedrückt, dass die Abdeckelementsicken 58 die Filterbälge 10, 20 in der Nut 50 verrutschsicher festklemmen. Die Abdeckelementsicke 58 kann insbesondere als Abdeckelementsicke in Form einer rinnenartigen Vertiefung oder Rändelung der U-förmigen Nut 50 des Abdeckelements 30 ausgebildet sein.

Figuren 3 und 4 zeigen ein zweites Ausführungsbeispiel für ein Filterelement 100 der vorliegenden Erfindung. Bei diesem zweiten Ausführungsbeispiel weist die Endscheibe 30 zwei U-förmige Nuten 50, 60 auf. Dabei wird jeweils einer der Filterbälge 10, 20 in eine der Nuten 50, 60 eingesetzt. Bei diesem Ausführungsbeispiel sind sowohl das erste Abdeckelement 30 als auch das zweite Abdeckelement 40, also sowohl die erste Endscheibe 30 als auch die zweite Endscheibe 40, ausschließlich durch ein Verformen oder Umformen der Abdeckelemente 30, 40 mit den Filterbälgen 10, 20 verbunden.

Die Nut 60 weist einen ersten Schenkel 64 und einen zweiten Schenkel 66 auf.

Figur 4 zeigt das Filterelement 100 als Einsatz in einem Gehäuse 102.

Dabei bezeichnet 48 einen zum Befestigen des Filtereinsatzes 100 in einem Gehäuse 102 (Figur 4) ausgebildeten Befestigungsflansch des Filterelements 100. Der Befestigungsflansch 48 ist an einem Ende des Filterelements 100 angeordnet und umgibt die Filterbälge 10, 20 ringförmig. Befestigungsflansch 48 ist zwischen den Gehäusedeckel und den Gehäusetopf geklemmt.

Das Gehäuse 102 weist eine zentrale Strömungsöffnung 104 im Gehäusedeckel zum Einströmen eines zu filternden Mediums und eine seitliche Ausströmöffnung 108 im Gehäusetopf für das gefilterte Reinfluid auf.

Im Detail werden beispielsweise in einem ersten Verfahrensschritt (i) die Filterbälge 10, 20 jeweils um ein zum Stützen der Filterbälge 10, 20 ausgebildetes, insbesondere metallisches Stützrohr 70, 80 gewickelt. Damit der Strom des durch das Filterelement 100 strömenden Aerosols nicht behindert wird, weisen die Stützrohre vorteilhafterweise Durchbrechungen oder Löeher auf. Die Stützrohre 70, 80 sind insbesondere als Mittelrohre zum Stützen des jeweiligen Filterbalgs 10, 20 ausgebildet.

In einem darauffolgenden Verfahrensschritt (ii) werden die Filterbälge 10, 20 mit den Stützrohren 70, 80 in die mindestens eine Nut 60 der zweiten Endscheibe 40 des Filterelements 100 eingesetzt. Die mindestens eine Nut 60 der zweiten Endscheibe 40 des Filterelements 100 ist also vorteilhafterweise dazu ausgebildet, auch mindestens eines der Stützrohre 70, 80 aufzunehmen.

In einem darauffolgenden Verfahrensschritt (iii) wird die erste Endscheibe 30 auf den axialen Endbereich der Filterbälge 10, 20, aufgesetzt, wobei dieser axiale Endbereich der zweiten Endscheibe 40 bzw. dem in die Nut 60 eingesetzten axialen Endbereich 30 der Filterbälge 10, 20 gegenüber liegt. Die mindestens eine Nut 50 der ersten Endscheibe ist also vorteilhafterweise dazu ausgebildet, einen axialen Endbereich 12, 22 mindestens eines der Filterbälge 10, 20 und einen axialen Endbereich mindestens eines der Stützrohre 70, 80 aufzunehmen.

In einem darauffolgenden Verfahrensschritt (iv) werden, beispielsweise zeitgleich, durch Eindrücken von Abdeckelementsicken 58, 68 mittels der Technik des Sickens oder des Bördelns die beiden Endscheiben 30, 40, also die erste Endscheibe 30 und die zweite Endscheibe 40, mit den Filterbälgen 10, 20 verbunden. Die weitere Abdeckelementsicke 68 kann insbesondere eine rinnenartige Vertiefung oder Rändelung der U-förmigen Nut 60 des weiteren Abdeckelements 40 sein.

Bei dem in Fig. 3 und 4 gezeigten zweiten Ausführungsbeispiel des Filterelements 100 werden sowohl in das in der ersten Nut 50 angeordnete Stützrohr 70 als auch in das in der zweiten Nut 50 angeordnete Stützrohr 80 Stützrohrsicken 72, 74, 82 84 eingedrückt. Bei dem in Fig. 1 und 2 gezeigten ersten Ausführungsbeispiel eines Filterelements 100, bei dem beide Stützrohre in der gleichen Nut 50 angeordnet sind, werden nur in das am zweiten Filterbalg 20 angeordnete Stützrohr 80 Stützrohrsicken 82, 84 eingedrückt. Die Stützrohrsicken 72, 74 bzw. 82, 84 sind dazu ausgebildet, derart mit den Abdeckelementsicken 58 bzw. 68 der Nut 50 bzw. 60 zusammenzuwirken, dass der Filterbalg 10, 20 in der Nut 50 bzw. 60 festklemmt. Wie in Fig. 1 gezeigt, kann die Stützrohrsicke 72, 82 direkt an der Abdeckelementsicke 58, 68 der ihr zugeordneten Endscheibe 30, 40 anliegen. Die Stützrohrsicken 72, 74 bzw. 82, 84 können beispielsweise als rinnenartige Vertiefung oder Rändelung des jeweiligen Stützrohrs 70, 80 ausgeführt sein.

Zur einfacheren Handhabung des Filterelements 100 sowie zum Schutz der von einem zum Abführen des gereinigten Gases oder zum Zuführen des zu reinigenden Aerosols ausgebildeten inneren Hohlraum 106 des Filterelements 100 abgewandten Mantelfläche des ersten Filterbalgs 10 kann ein rohrartig geformtes, insbesondere metallisches Schutzelement 90, insbesondere ein gitterartig durchbrochenes metallisches Schutzrohr, um die Mantelfläche des ersten Filterbalgs 10 angeordnet und mittels der Technik des Sickens oder des Bördelns an der Mantelfläche des ersten Filterbalgs 10 festgeklemmt werden. Wie in Figuren 1 bis 4 gezeigt, kann das Schutzelement 90 also mindestens eine, insbesondere umlaufende, Schutzelementsicke 92, 94 aufweisen, wobei die Schutzelementsicke 92, 94 dazu ausgebildet ist, das Schutzelement 90 an der äußersten Mantelfläche der Filterbälge 10, 20 verrutschsicher festzuklemmen.

Bei dem in Figuren 1 und 2 gezeigten ersten Ausführungsbeispiel eines Filterelements 100 wirkt eine im Bereich der zweiten Endscheibe 40 angeordnete Schutzelementsicke 94 mit einer gegenüberliegenden Abdeckelementsicke 68 derart zusammen, dass die beiden Filterbälge 10, 20 zwischen dieser Schutzelementsicke 94 und der gegenüberliegenden Abdeckelementsicke 68 festklemmen.

Bei dem in Figuren 3 und 4 gezeigten zweiten Ausführungsbeispiel eines Filterelements 100 wirkt eine im Bereich der zweiten Endscheibe 40 angeordnete Schutzelementsicke 94 mit einer gegenüberliegenden Abdeckelementsicke 68 derart zusammen, dass der erste Filterbalg 10 zwischen dieser Schutzelementsicke 94 und der gegenüberliegenden Abdeckelementsicke 68 festklemmt.

Zum Abdichten der Verbindung zwischen den Filterbälgen 10, 20 und der zweiten Endscheibe 40 kann, beispielsweise nach dem Festklemmen des Schutzelements 90 an der äußersten Mantelfläche der Filterbälge 10, 20, auf den Boden 62 der U-förmigen Nut 60 der zweiten Endscheibe 40 mindestens ein axial wirkendes Dichtelement aufgebracht, insbesondere aufgespritzt oder aufgesetzt, werden.

In Kurzform weist ein vorteilhaftes Ausführungsbeispiel des Verfahrens der vorliegenden Erfindung die folgenden Verfahrensschritte auf:
(i) Wickeln des Filtermaterials der Filterbälge 10, 20, insbesondere von Vlies, auf insbesondere metallische Stützrohre 70, 80;
(ii) Einsetzen der Stützrohre 70, 80 mit einem axialen Endbereich 14, 24 in die insbesondere metallische Endscheibe 40, insbesondere in die U-förmige Nut 60 der zweiten Endscheibe 40;
(iii) Aufsetzen der insbesondere metallischen Endscheibe 30 mit deren mindestens einen U-förmigen Nut 50 auf die der zweiten Endscheibe 40 gegenüberliegende Stirnseite (axialer Endbereich 12, 22) des Filterbalgs 100;
(iv) Verbinden der Vlieswickel 10, 20 mit der Endscheibe 30 mittels Sicken und gleichzeitig Verbinden der Vlieswickel 10, 20 mit der zweiten Endscheibe 40 mittels Sicken;
(v) optional Anordnen des metallischen Schutzelements oder Schutzgitters 90 um den äußersten Vlieswickel 10, dann nochmal Sicken und
(vi) optional Aufbringen eines Dichtelements auf die zweite Endscheibe 40.

Bei den in Figuren 1 bis 4 gezeigten beiden Ausführungsbeispielen eines Filterelements 100 sind alle Elemente dieser Filterelemente 100 einschließlich aller Abscheidemedien ohne die Verwendung von Klebstoff oder Vergussmittel rein mechanisch miteinander verbunden. Alle Elemente der Filterelemente 100 sind mittels mindestens einer Klemmverbindung miteinander verbunden, wobei die Klemmverbindung ausschließlich durch eine Verformung der metallischen Elemente der Filtereinsätze 100, gebildet ist. Die Verformung der metallischen Elemente erfolgt mittels der Technik des Sickens oder Bördelns. Dabei werden die Abdeckelemente 30, 40, die Stützrohre 70, 80 und das Schutzelement 90 gesickt oder gebördelt.

Statt einer Sickentechnik können auch andere Verbindungsmethoden eingesetzt werden.

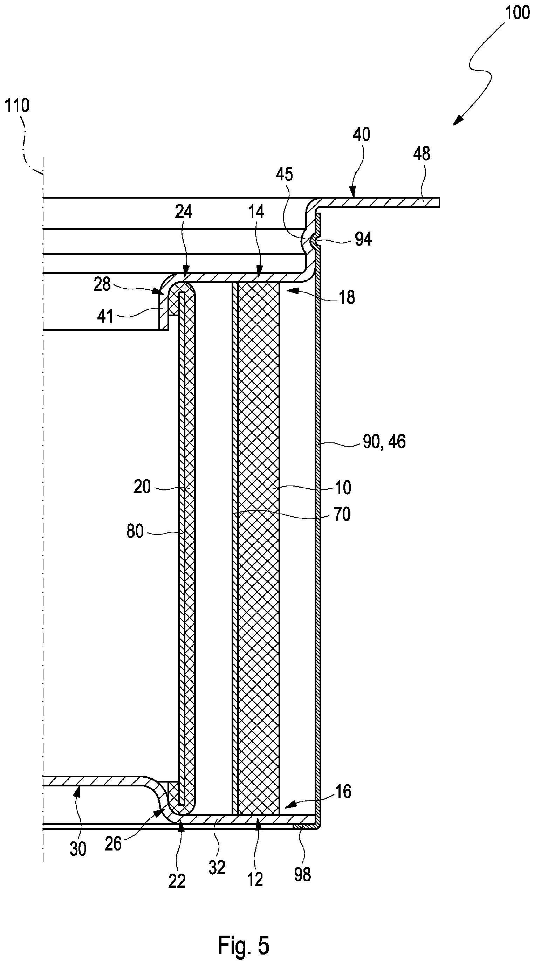

Eine derartige alternative Ausgestaltung des Filterelements 100 ist in Figur 5 dargestellt. Figur 5 zeigt in Längsschnittdarstellung ein Detail eines Ausführungsbeispiels eines Filterelements 100, bei dem ein radial außen angeordnetes Schutzelement 90 als Zuganker 46 dient. Das Schutzelement 90, insbesondere ein Schutzrohr aus Metall oder Kunststoff, ist an dem ersten Abdeckelement 30 radial nach innen weisend umgebördelt und bildet so einen radial inneren Umschlag 98, der an einem Rand 32 des ersten Abdeckelements 30 von außen anliegt. Die Filterbälge 10, 20 liegen mit ihren axialen Endbereichen 12, 22 an dem Abdeckelement 30 an.

Das zweite Abdeckelement 40 ist an einer Wand zwischen einem ebenen, ringförmigen Bereich, der die Filterbälge 10, 20 an ihren axialen Endbereichen 14, 24 abdeckt, und dem Befestigungsflansch 48 durch eine Sicke 94 in dem Schutzelement 90 verbunden, insbesondere kalt verschweißt. Das zweite Abdeckelement 40 weist an dieser Stelle eine Wulst 45 auf.

Es sind zwei Filterbälge 10, 20 mit ihren Stützrohren 70, 80 koaxial zueinander angeordnet. Der zweite, radial innenliegende Filterbalg 20 ist an seinen beiden Endbereichen 22, 24 als jeweiliger Dichtbereich 26, 28 dichtend über sein Stützrohr 80 gelegt. An dem ersten Abdeckelement 30 liegt der Endbereich 22 des zweiten Filterbalgs 20 an der Stufe zwischen glattem Außenrand 32 und gewölbtem Inneren des Abdeckelements 30 an, am zweiten Abdeckelement 40 liegt der übergeschlagene Endbereich 24 des Filterbalgs 20 an einem ringförmigen, axial nach innen weisenden Stutzen 41 des zweiten Abdeckelements 40 an. Der erste Filterbalg 10 liegt mit seinen axialen Endbereichen 12, 14 bündig an den Abdeckelementen 30, 40 an, welche jeweils einen Dichtbereich 16, 18 bilden. Die Fixierung des Schutzelements 90 an dem ersten und dem zweiten Abdeckelement 30, 40 fixiert die zwischen den Abdeckelementen 30, 40 eingespannten Filterbälge 10, 20 axial unter Beibehaltung des Anpressdrucks der Filterbälge 10, 20 an die Abdeckelemente 30, 40.

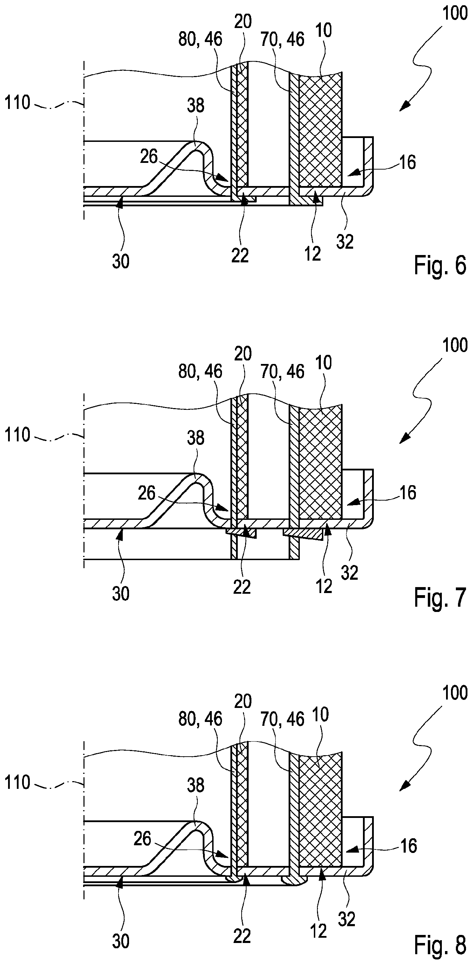

Figuren 6 bis 8 zeigen in Längsschnittdarstellung Varianten von als Zuganker 46 ausgebildeten Stützrohren 70, 80. Die Zugankerfunktion der Stützrohre 70, 80 bewirkt eine axiale Verpressung der Endbereiche 12, 14, 22, 24 der Filterbälge 10, 20. Die Filterbälge 10, 20 mit ihren Stützrohren 70, 80 sind am Rand 32 des ersten Abdeckelements 30 angeordnet. Der Rand 32 kann als Nut ausgebildet und radial nach außen durch einen äußeren Bund und radial nach innen durch eine axial nach innen weisende Wulst 38 begrenzt sein. Die Stützrohre 70, 80 weisen eine axial größere Erstreckung auf als die Filterbälge 10, 20. Die Endbereiche 12, 14, 22, 24 der Filterbälge 10, 20 bilden auch die jeweiligen Dichtbereiche 16, 18, 26, 28 der Filterbälge 10, 20.

In Figur 6 sind die Stützrohre 70, 80 bereichsweise durch den Rand 32 des unteren Abdeckelements 30 durchgeführt und umgelegt. Fig. 7 zeigt eine Variante, bei der die Stützrohre 70, 80 bereichsweise durch den Rand 32 des ersten Abdeckelements 30 durchgesteckt und mit einem Sicherungsstift oder Splint fixiert sind. Fig. 8 zeigt eine Variante, bei der die Stützrohre 70, 80 bereichsweise durch den Rand 32 des ersten Abdeckelements 30 durchgesteckt und verhämmert sind, so dass von den Stützrohren 70, 80 eine Zugspannung aufgebracht werden kann.

Am entgegengesetzten Ende des Filterelements 100 kann die Befestigung der Stützrohre 70, 80 an dem zweiten Abdeckelement 40 auf gleiche Weise oder wie in den vorstehend oder nachstehend beschriebenen Ausführungen erfolgen.

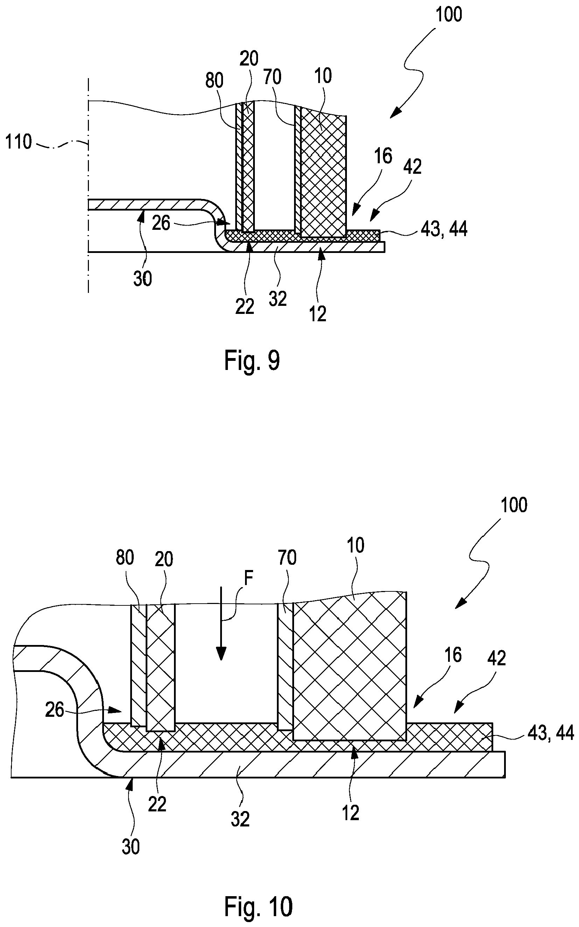

Figur 9 zeigt in Längsschnittdarstellung ein Detail eines Ausführungsbeispiels eines Filterelements 100, bei dem ein Filterbalgverbund 42 zur axialen Abdichtung eingesetzt ist. Figur 10 zeigt in Längsschnittdarstellung ein Detail des Ausführungsbeispiels aus Figur 9. Der Filterbalgverbund 42 umfasst jeweils den Filterbalg 10, 20 und einen weiteren Filterbalg 44 in Form eines flachen Rings 43. Der Ring 43 ist auf dem Rand 32 des ersten Abdeckelements 30 unter den beiden Filterbälgen 10, 20 angeordnet. Die Filterbälge 10, 20 drücken axial mit einer Kraft F in den Ring 43 und verdichten diesen, so dass eine axiale Abdichtung zumindest durch den Ring 43 erfolgt. Der Filterbalgverbund 42 ist an dem ersten Abdeckelement 30 axial länger als die Stützrohre 70, 80 ausgebildet. Der jeweilige Filterbalg 10, 20 weist zweckmäßigerweise am abdeckelementseitigen Ende wenigstens die gleiche axiale Erstreckung, vorzugsweise eine größere axiale Erstreckung auf als das zugehörige Stützrohr 70, 80.

Am entgegengesetzten Ende des Filterelements 100 kann die Befestigung der Stützrohre 70, 80 an dem zweiten Abdeckelement 40 auf gleiche Weise oder wie in den vorstehend oder nachstehend beschriebenen Ausführungen erfolgen.

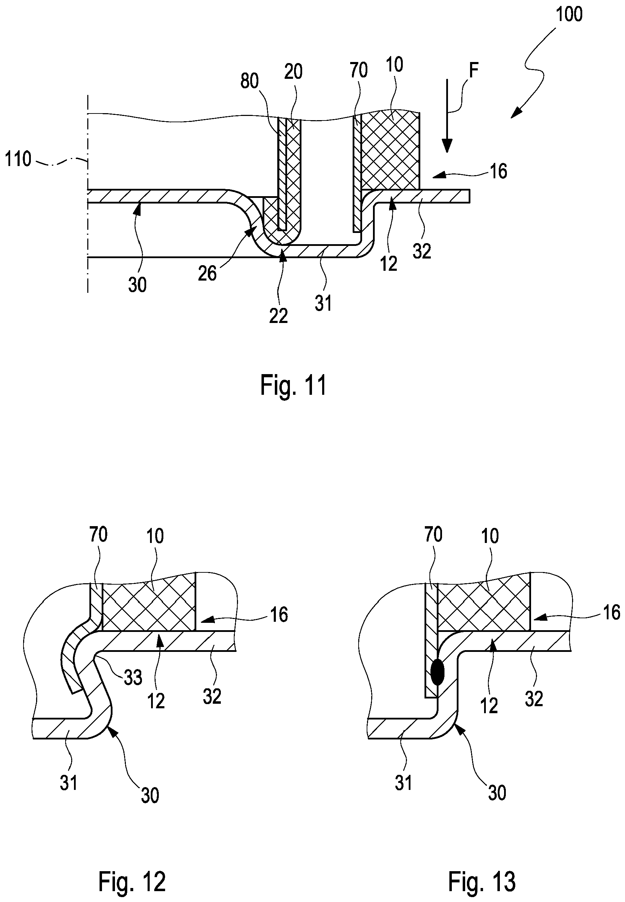

Figur 11 zeigt in Längsschnittdarstellung ein Detail eines Ausführungsbeispiels eines Filterelements 100. Figur 12 zeigt ein Detail einer Variante des Ausführungsbeispiels aus Figur 11 mit einer geklemmten Verbindungsvariante von Stützrohr 70 und Abdeckelement 30 zur axialen Fixierung, und Figur 13 zeigt ein Detail einer Variante des Ausführungsbeispiels aus Figur 11 mit einer geschweißten Verbindungsvariante von Stützrohr 70 und Abdeckelement 30.

Dabei ist das erste Stützrohr 70 in axialer Erstreckung länger ausgebildet als der zugehörige erste Filterbalg 10. Das Stützrohr 80 mit dem zweiten Filterbalg 20 ist dagegen kürzer als der Filterbalg 20 ausgebildet, wobei zumindest der in der Figur untere Endbereich 22 des Filterbalgs 20 über das untere Ende des Stützrohrs 80 umgeschlagen ist. An den äußeren Rand 32 des ersten Abdeckelements 30 schließt sich radial nach innen eine Nut 31 an, in welche das erste Stützrohr 70 mit seinem axialen Überstand gegenüber seinem Filterbalg 10 ragt und an der radial äußeren Nutwand anliegt. Auch das zweite Stützrohr 80 mit dem umgeschlagenen Endbereich 22 des Filterbalgs 20 ragt in die Nut 31 und liegt an der radial inneren Nutwand der Nut 31 an. Auf diese Weise dichten der erste Filterbalg 10 mit seinem am axialen Ende verpressten Endbereich 12 und der umgeschlagene Endbereich 22 des zweiten Filterbalgs 20 als jeweiliger Dichtbereich 16, 26 der Filterbälge 10, 20. Durch die axiale Verpressung des ersten und zweiten Filterbalgs 10, 20 liegt eine ausreichende Dichtwirkung vor.

In Figur 12 ist die radial äußere Nutwand der Nut 32 wenigstens bereichsweise radial nach innen gedrückt, so dass sich an der Nutwand ein Hinterschnitt 33 ausbildet, an dem das Stützrohr 70 verrasten kann. In Figur 13 bleibt die Nutwand im Wesentlichen gerade, und das Stützrohr 70 ist mit seinem Überstand wenigstens bereichsweise an der radial äußeren Nutwand der Nut 31 angeschweißt.

Am entgegengesetzten Ende des Filterelements 100 kann die Befestigung der Stützrohre 70, 80 an dem zweiten Abdeckelement 40 auf gleiche Weise oder wie in den vorstehend oder nachstehend beschriebenen Ausführungen erfolgen.

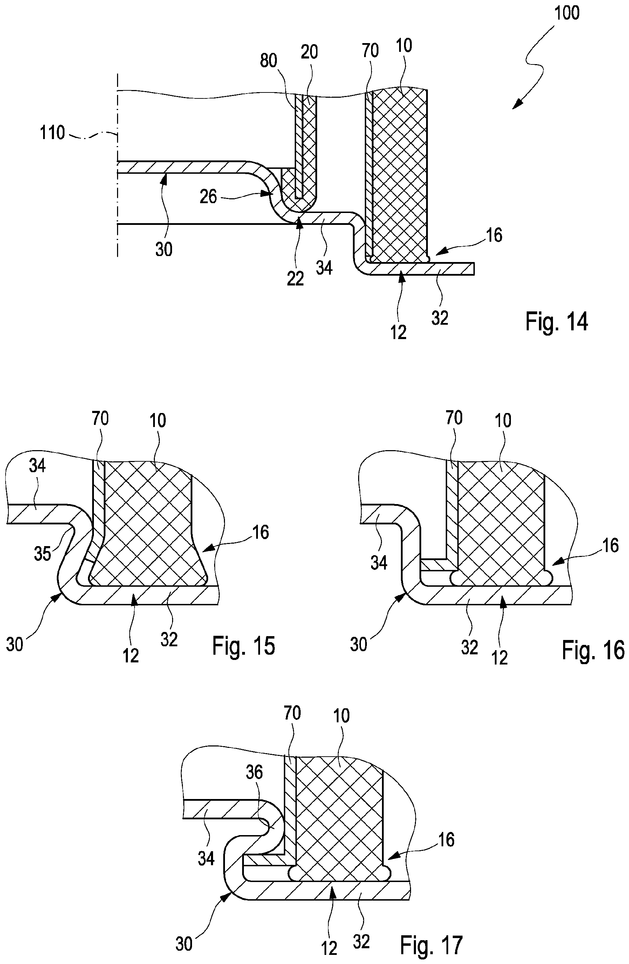

Figur 14 zeigt in Längsschnittdarstellung ein Detail eines Ausführungsbeispiels eines Filterelements 100, bei dem ein Filterbalg 10, 20 eine größere axiale Erstreckung aufweist als dessen Stützrohr 70, 80. Figur 15 zeigt ein Detail einer Variante des Ausführungsbeispiels in Figur 14, mit einer verkrallten Verbindungsvariante von Stützrohr 70 und erstem Abdeckelement 30. Figur 16 zeigt ein Detail einer Variante des Ausführungsbeispiels in Figur 14, mit einem Fügeschritt zwischen Stützrohr 70 und erstem Abdeckelement 30, und Figur 17 zeigt ein Detail der Variante in Figur 16, mit einem auf den Fügeschritt folgenden Verformungsschritt.

Die Filterbälge 10, 20 sind auf dem ersten Abdeckelement 30 angeordnet, die nach innen ansteigend stufig ausgebildet ist. Ausgehend vom äußeren Rand 32, auf dem der erste Filterbalg 10 mit Stützrohr 70 angeordnet ist, folgt ein erhöhtes Plateau 34 und darauf eine weitere Erhöhung. Das erste Stützrohr 70 kann am Übergang zwischen dem Rand 32 und dem Plateau 34 anliegen. Das zweite Stützrohr 80 liegt am Übergang zwischen dem Plateau 34 und der weiteren Erhöhung an.

Eine Verbindung zwischen dem Stützrohr 70 und dem ersten Abdeckelement 30 kann beispielsweise durch wenigstens bereichsweises Verschweißen erfolgen.

Eine Verbindung zwischen dem Stützrohr 70 und dem ersten Abdeckelement 30 kann, wie in Figur 15 dargestellt, bewirkt werden, indem der Übergang zwischen Plateau 34 und Rand 32 wenigstens bereichsweise radial nach außen gedrückt wird, worauf sich ein Knick 35 bildet, an dem sich das Stützrohr 70 verkrallen kann.

Denkbar ist auch, dass das Stützrohr 70 an seinem freien Ende einen Bund aufweist, wie in Figur 16 dargestellt ist. Der Bund kann wenigstens bereichsweise mit dem Abdeckelement 30 verschweißt werden. Alternativ kann, wie in Figur 17 dargestellt ist, in den Übergang zwischen Plateau 34 und Rand 32, der wenigstens bereichsweise verformt wird, beispielsweise eine Sicke 36 eingedrückt werden, die den Bund des Stützrohrs 70 sicher einklemmt.

Der erste Filterbalg 10, sowie ggf. der zweite Filterbalg 20, ist zwischen dem ersten Abdeckelement 30 und dem nicht dargestellten zweiten Abdeckelement axial eingespannt. Am entgegengesetzten Ende des Filterelements 100 kann die Befestigung der Stützrohre 70, 80 an dem zweiten Abdeckelement auf gleiche Weise oder wie in den vorstehend oder nachstehend beschriebenen Ausführungen erfolgen.

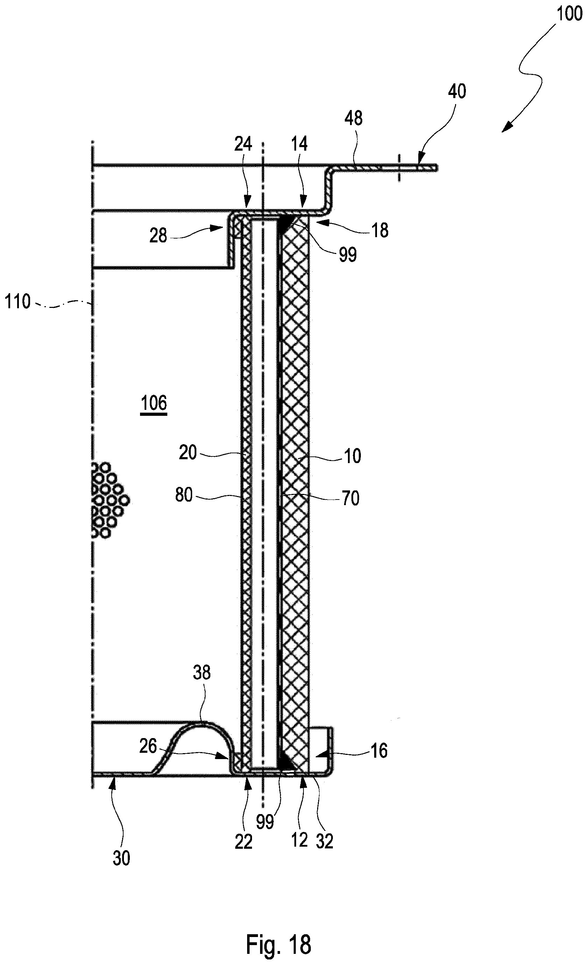

Figur 18 zeigt in Längsschnittdarstellung ein Detail eines Ausführungsbeispiels eines Filterelements 100, bei dem das erste Stützrohr 70 mit den ersten und zweiten Abdeckelementen 30, 40 wenigstens verschweißt ist. Der erste Filterbalg 10 kann vor dem Verschweißen axial unter Vorspannung zwischen den Abdeckelementen 30, 40 eingespannt sein und durch die Verschweißung axial fixiert werden. Die Verschweißung 99 kann als Schweißnaht ausgeführt werden oder mit einzelnen Schweißpunkten. Die Verschweißung 99 kann an der Außenseite des Stützrohrs 70 erfolgen.

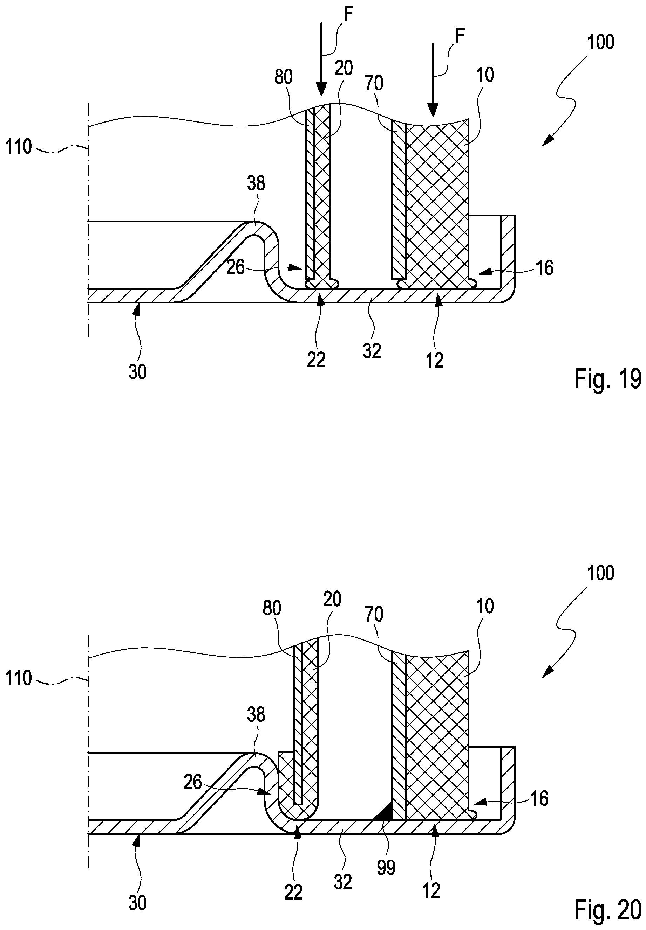

Figur 19 zeigt in Längsschnittdarstellung ein Detail eines Ausführungsbeispiels eines Filterelements 100, bei dem ein Stützrohr 70 mit einem Abdeckelement 30 verschweißt werden soll. Die Filterbälge 10, 20 sind zumindest am dem Abdeckelement 30 zugewandten Ende in axialer Richtung länger ausgebildet als ihre Stützrohre 70, 80. Die Filterbälge 10, 20 sind mit ihren Stützrohren 70, 80 am äußeren Rand 32 des ersten Abdeckelements 30 angeordnet und mit einer Kraft F gegen das Abdeckelement 30 gepresst, was durch in Richtung des Abdeckelements 30 weisende Pfeile angedeutet ist.

Radial innen vom Rand 32 ausgehend kann ein axial nach innen weisender Wulst 38 im Abdeckelement 30 vorgesehen sein.

Die axialen Endbereiche der Filterbälge 10, 20 werden verpresst und damit verdichtet, so dass sie beim bündigen Anliegen am Abdeckelement 30 eine ausreichende Dichtfunktion aufweisen. Anschließend kann das äußere Stützrohr 70 verschweißt werden, beispielsweise an seiner inneren Kontaktfläche zum Abdeckelement 30. Die Verschweißung 99 kann etwa mit Punktschweißen oder mit durchgehender oder längerer Schweißnaht ausgeführt sein, wie in Figur 20 angedeutet ist.

Figur 20 zeigt auch eine Variante des Ausführungsbeispiels nach Figur 19, bei dem der zweite Filterbalg 20 mit seinem freien Ende über das zweite Stützrohr 80 gelegt ist. In diesem Fall kann das zweite Stützrohr 80 an der Wulst 38 anliegen. Das umgelegte Ende des zweiten Filterbalgs 20 sorgt für eine ausreichende Dichtigkeit.

Am entgegengesetzten Ende des Filterelements 100 kann die Befestigung der Stützrohre 70, 80 an dem zweiten Abdeckelement 40 auf gleiche Weise oder wie in den vorstehend beschriebenen Ausführungen erfolgen.

## Patentansprüche

1. Filterelement (100) zum Einbau in ein Gehäuse (102), umfassend
- wenigstens einen zum Abscheiden von Flüssigkeit aus Aerosol ausgebildeten, im Wesentlichen hohlzylindrischen Filterbalg (10, 20) und
- zwei zum Abdecken axialer Endbereiche (12, 14, 22, 24) des Filterbalgs (10, 20) ausgebildete Abdeckelemente (30, 40),
wobei der wenigstens eine Filterbalg (10, 20) mit seinen axialen Endbereichen (12, 14, 22, 24) jeweils gegen das Abdeckelement (30, 40) mit einer axialen Verpressung verpresst ist, der wenigstens eine Filterbalg (10, 20) in axialer Richtung fixiert ist und
zwischen Filterbalg (10, 20) und Abdeckelement (30, 40) jeweils ein Dichtbereich (16, 18, 26, 28) ausgebildet ist.

2. Filterelement nach Anspruch 1, wobei wenigstens einer der Dichtbereiche (16, 18, 26, 28) zwischen Filterbalg (10, 20) und dem jeweiligen Abdeckelement (30, 40) jeweils durch den axialen Endbereich (12, 14, 22, 24) des wenigstens einen Filterbalgs (10, 20) gebildet ist, der bündig an dem jeweiligen Abdeckelement (30, 40) anliegt.

3. Filterelement nach Anspruch 1 oder 2, wobei wenigstens einer der Dichtbereiche (16, 18, 26, 28) durch einen Filterbalgverbund (42) gebildet ist, wobei der axiale Endbereich (12, 14, 22, 24) des Filterbalgs (10, 20) an wenigstens einem weiteren Filterbalg (44), insbesondere einem ringförmigen Filterbalg (44), anliegt.

4. Filterelement nach wenigstens einem der vorhergehenden Ansprüche, wobei zur axialen Verpressung des Filterbalgs (10, 20) ein oder mehrere Zuganker (46) vorgesehen sind, wobei insbesondere ein Stützrohr (70) als Zuganker (46) vorgesehen ist und/oder wobei ein radial den äußeren Filterbalg (10) umgebendes Schutzelement (90) als Zuganker (46) vorgesehen ist.

5. Filterelement nach Anspruch 4, wobei ein oder mehrere Zugstangen durch die Abdeckelemente (30, 40) geführt sind.

6. Filterelement nach wenigstens einem der vorhergehenden Ansprüche, wobei zur axialen Verpressung ein Stützrohr (72) mit wenigstens einem der Abdeckelemente (30, 40) verschweißt ist.

7. Filterelement nach einem der vorhergehenden Ansprüche, wobei eine axiale Erstreckung des Filterbalgs (10, 20) größer ist als die seines Stützrohrs (70, 80).

8. Filterelement nach wenigstens einem der vorhergehenden Ansprüche, wobei die axiale Verpressung durch Verschweißen eines Stützrohrs (70) und/oder einen Zuganker (42) und/oder eine mechanische Verbindung zwischen dem Abdeckelement (30, 40) und dem Filterbalg (10, 20) rein durch eine mittels Verformen oder Umformen des Abdeckelements (30, 40) gebildete Struktur (50, 60, 58, 68) des Abdeckelements (30, 40) gebildet ist, wobei die Struktur (50, 60, 58, 68) des Abdeckelements (30, 40) dazu ausgebildet ist, den Filterbalg (10, 20) am Abdeckelement (30, 40) festzuklemmen.

9. Filterelement nach Anspruch 8, wobei eine rein mechanische Verbindung zwischen dem Abdeckelement (30, 40) und dem Filterbalg (10, 20) rein durch eine mittels Verformen oder Umformen des Abdeckelements (30, 40) gebildete Struktur (50, 60, 58, 68) des Abdeckelements (30, 40) gebildet ist, wobei die Struktur (50, 60, 58, 68) des Abdeckelements (30, 40) dazu ausgebildet ist, den Filterbalg (10, 20) am Abdeckelement (30, 40) festzuklemmen.

10. Filterelement nach Anspruch 9, wobei die Struktur (50, 60, 58, 68) des Abdeckelements (30, 40) wenigstens eine in einer Schnittansicht entlang der Längsachse (110) des Filterelements im Wesentlichen U-förmige Nut (50, 60) und jeweils wenigstens eine an den beiden Schenkeln (54, 56, 64, 66) der Nut (50, 60) angeordnete Abdeckelementsicke (58, 68) aufweist, wobei in Gebrauchsstellung des Filterelements (100)
- die Nut (50, 60) den axialen Endbereich (12, 14, 22, 24) zumindest eines der Filterbälge (10, 20) aufnimmt,
- der Boden (52) der Nut (50, 60) direkt oder indirekt am axialen Endbereich (12, 14, 22, 24) des in der Nut (50, 60) aufgenommenen Filterbalgs (10, 20) anliegt und die beiden Schenkel (54, 56, 64, 66) der Nut (50, 60) sich parallel zur Mantelfläche des in der Nut (50, 60) aufgenommenen Filterbalgs (10, 20) erstrecken und
- die Abdeckelementsicken (58, 68) den in der Nut (50, 60) aufgenommenen Filterbalg (10, 20) verrutschsicher in der Nut (50, 60) festklemmen.

11. Filterelement nach Anspruch 10, wobei die Abdeckelementsicken (58, 68) an einander gegenüberliegenden Bereichen der Schenkel (54, 56, 64, 66) der Nut (50, 60) angeordnet sind.

12. Filterelement nach wenigstens einem der Ansprüche 10 oder 11, wobei die Nut (50, 60) in einer Schnittansicht quer zur Längsachse des Filterelements (100) im Wesentlichen ringförmig ausgebildet ist und die Abdeckelementsicken (58, 68) den gesamten Umfang der Schenkel (54, 56, 64, 66) der Nut (50, 60) umlaufen.

13. Filterelement nach wenigstens einem der Ansprüche 10 bis 12, wobei wenigstens ein zum Stützen des Filterbalgs (10, 20) ausgebildetes, insbesondere metallisches, Stützrohr (70, 80) vorgesehen ist, wobei die Nut (50, 60) dazu ausgebildet ist, zusätzlich das Stützrohr (70, 80) bzw. wenigstens eines der Stützrohre (70, 80) aufzunehmen und wobei das Stützrohr (70, 80) wenigstens eine Stützrohrsicke (72, 74, 82, 84) aufweist, die dazu ausgebildet ist, derart mit den Abdeckelementsicken (58, 68) der Nut (50, 60) zusammenzuwirken, dass der Filterbalg (10, 20) in der Nut (50, 60) festklemmt, insbesondere dass die Stützrohrsicke (72, 74, 82, 84) direkt an einer der Abdeckelementsicken (58, 68) anliegt.

14. Filterelement nach wenigstens einem der Ansprüche 10 bis 13, wobei in der Nut (50, 60) die axialen Endbereiche (12, 14, 22, 24) von zumindest zwei Filterbälgen (10, 20) aufgenommen sind, wobei die jeweiligen Filterbälge (10, 20) durch wenigstens einen Abstandshalter (96), beispielsweise durch wenigstens ein Einlegelement, voneinander beabstandet sind.

15. Filterelement nach wenigstens einem der Ansprüche 10 bis 14, wobei wenigstens zwei Filterbälge (10, 20) vorgesehen sind, insbesondere ein Primärfilterbalg (10) und ein Sekundärfilterbalg (20), wobei das Abdeckelement (30, 40) oder wenigstens eines der Abdeckelemente (30, 40) für jeden der Filterbälge (10, 20) eine U-förmige Nut (50, 60) aufweist und wobei die U-förmigen Nuten (50, 60) jeweils an der äußeren Mantelfläche, an der inneren Mantelfläche und an der Deckfläche des ihnen zugeordneten hohlzylindrischen Filterbalgs (10, 20) direkt oder indirekt, z.B. unter Zwischenordnung des zum Stützen des Filterbalgs (10, 20) ausgebildeten Stützrohrs (70, 80), anliegen.

16. Filterelement nach wenigstens einem der Ansprüche 10 bis 15, wobei wenigstens ein rohrartig geformtes, insbesondere metallisches, Schutzelement (90) vorgesehen ist, insbesondere ein gitterartig durchbrochenes metallisches Schutzrohr, das die von einem zum Abführen des gereinigten Gases oder zum Zuführen des zu reinigenden Aerosols ausgebildeten inneren Hohlraum (106) des Filterelements abgewandte äußere Mantelfläche des Filterbalgs (10, 20), bzw. die vom inneren Hohlraum (106) am weitesten abgewandte äußerste Mantelfläche der Filterbalg (10, 20), umgibt, wobei das Schutzelement (90) wenigstens eine, insbesondere umlaufende, Schutzelementsicke (92, 94) aufweist und wobei die Schutzelementsicke (92, 94) dazu ausgebildet ist, das Schutzelement (90) an der äußeren Mantelfläche des Filterbalgs (10, 20) bzw. an der äußersten Mantelfläche des Filterbalgs (10, 20) verrutschsicher festzuklemmen.

17. Filterelement nach Anspruch 16, wobei die Schutzelementsicke (92, 94) bzw. zumindest eine (106) der Schutzelementsicken (92, 94) dazu ausgebildet ist, derart mit zumindest einer der Abdeckelementsicken (58, 68) zusammenzuwirken, dass das Abdeckelement (100) im Schutzelement (90) festklemmt, insbesondere dass die Schutzelementsicken (92, 94) bzw. zumindest eine (92) der Schutzelementsicken (92, 94) direkt an einer (68) der Abdeckelementsicken (92, 94) anliegt.

18. Verfahren zum Herstellen eines Filterelements (100) zum Einbau in ein Gehäuse (102), wobei ein zum Abscheiden von Flüssigkeit aus einem Aerosol ausgebildeter hohlzylindrischer Filterbalg (10, 20) oder Filterbalgverbund (42) in axialer Richtung gegen ein zum Abdecken eines axialen Endbereichs (12, 14, 22, 24) des Filterbalgs (10, 20) oder Filterbalgverbunds (42) ausgebildetes Abdeckelement (30, 40) mit einer axialen Verpressung verpresst wird, sowie axiales Fixieren des Filterbalgs (10, 20), oder Filterbalgverbunds (42) unter Beibehaltung der axialen Verpressung.
